Europäisches Patentamt

European Patent Office

Office européen des brevets

(19)

(11) Veröffentlichungsnummer: **0 191 750**
**B1**

(12) **EUROPÄISCHE PATENTSCHRIFT**

(45) Veröffentlichungstag der Patentschrift:
23.08.89

(21) Anmeldenummer: 86890004.4

(22) Anmeldetag: 09.01.86

(51) Int. Cl.⁴: **B 29 C 67/22**, B 29 C 33/06,
B 29 C 35/08 //
B29K105:04, B29K105:06

(54) Verfahren und Vorrichtung zur Herstellung von Formkörpern.

(30) Priorität: 17.01.85 AT 104/85

(43) Veröffentlichungstag der Anmeldung:
20.08.86 Patentblatt 86/34

(45) Bekanntmachung des Hinweises auf die Patenterteilung:
23.08.89 Patentblatt 89/34

(84) Benannte Vertragsstaaten:
BE CH DE FR GB LI LU NL SE

(56) Entgegenhaltungen:
AT-B-301 159
CH-A-416 076
DE-A-1 921 065
DE-A-3 331 461
DE-C-554 028

(73) Patentinhaber: NAUE & NAUE Gesellschaft m.b.H.,
A-8974 Mandling (AT)

(72) Erfinder: Schubert, Arnulf, A-5550 Radstadt Nr. 257
(AT)

(74) Vertreter: Wildhack, Helmut, Dr. Dipl.- Ing.,
Patentanwälte Dipl.- Ing. Peter Boeckmann Dipl.-
Ing. Leo Brauneiss Dr. Dipl.- Ing. Helmut
Wildhack Strohgasse 10, A-1030 Wien (AT)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

EP 0 191 750 B1

**Beschreibung**

Die Erfindung betrifft ein Verfahren zur Herstellung von Formkörpern in Formen, wobei die mehrteiligen, vorzugsweise metallischen, Formen in einen die Formen umgebenden Induktor zur induktiven Erwärmung der Formen eingeführt werden, in denen die Ausgangsstoffe für die Formkörper enthalten sind. Ferner betrifft die Erfindung eine Anordnung zur Herstellung von Formkörpern mit einem Induktor und mehrteilige, vorzugsweise metallische Formen, die in den Induktor zur induktiven Erwärmung einführbar sind und die Ausgangsstoffe für die Formkörper enthalten.

Bei der Herstellung von Schaumstoffkörpern, insbesondere solchen aus Polyurethanschaum, bestehen Schwierigkeiten bei der Oberflächenausbildung und der vollkommenen Ausreaktion der Komponenten in Oberflächenbereichen. Bekannt ist ein Verfahren, bei dem die in Formen befindlichen reaktionsfähigen Komponenten mit Dampf oder Heißluft beheizt werden, um die erforderlichen Wärmemengen zuzuführen. Diese Verfahren bedingen jedoch einen beträchtlichen apparativen Aufwand, weisen einen schlechten Wirkungsgrad auf, die Erwärmung dauert relativ lange und ist nicht optimal steuerbar.

Insbesondere hat sich in der Praxis gezeigt, daß Formen mit unregelmäßiger Oberflächengestalt mit Dampf oder ähnlichen Einrichtungen nicht ausreichend gleichmäßig und rasch zu erwärmen sind.

Es ist bekannt, mehrteilige Formen zum Vulkanisieren einzusetzen; die dort eingesetzten Frequenzen erfordern keine gegenseitige Isolierung der einzelnen Formteile, da eine ungleichmäßige Aufheizung der massiven Formen ohne Nachteile ist und die entwickelte Wärme den Formkörpern zugeführt werden soll. Eine genaue Temperaturverteilung über die Oberfläche der Formkörper ist nicht erforderlich.

Mehrteilige Formen, die aus direkt an HF-Elektroden angeschlossenen, gegeneinander elektrisch isolierten Formteilen bestehen, ermöglichen nicht eine exakte Einstellung der Temperatur an der Oberfläche eines Formkörpers, da die Eindringtiefe in den Formkörper zu groß wird. Derartige Einrichtungen sind demzufolge vom Arbeitsprinzip her nicht mit Einrichtungen vergleichbar, bei denen die Formkörper in Formen in einem Induktor hergestellt werden, der die Erwärmung mittelbar über die Formwände vornimmt.

Aus der DE-PS 554 028 sind ein Verfahren und eine Vorrichtung der eingangs genannten Art bekannt. Diese bekannte Anordnung dient zur induktiven elektrischen Beheizung von Vulkanisierformen durch ein magnetisches Wechselfeld, wobei ein an beiden Enden mit Ein- bzw. Austrittsöffnungen für die Vulkanisierformen versehenes Solenoid mit einer in der Achsrichtung des Solenoids wirkenden Fördervorrichtung für die Vulkanisierformen ausgerüstet ist. Angaben bezüglich einzusetzender Frequenzen bzw. über die elektrische Isolation der Formteile werden nicht gemacht.

Zur Vermeidung der Nachteile der bekannten Verfahren ist das Verfahren der eingangs genannten Art erfindungsgemäß dadurch gekennzeichnet, daß zur Herstellung von Formkörpern aus Kunststoff, insbesondere aus Polyurethanschaumstoff oder aus mit Kunstharzen oder Latex getränkten oder benetzten Fasern, Vliesen oder dergleichen, aus den in die Formen eingebrachten reaktionsfähigen Ausgangsstoffen eine Frequenz von 1 - 30 kHz, vorzugsweise 5 - 12 kHz, eingestellt wird und Formen eingesetzt werden, bei denen die einzelnen Formteile zur Unterbindung eines Stromflusses in der Form um den Formkörper herum gegeneinander elektrisch isoliert sind. Vorteilhaft ist es hiebei, wenn der Stromfluß in den Formwänden metallischer Formen mit an den Außenseiten der Formwände ausgebildeten oder aufgebrachten Verstärkungen bzw. Auflagen aus einem dem Formmaterial gegebenenfalls gleichen Material verteilt wird.

Es können unregelmäßig konfigurierte Formen in den die Form umgebenden Induktor eingebracht werden, in dem die dünn ausgebildeten Formwände induktiv beheizt werden, wobei der Außenschicht des Formkörpers die zur Ausbildung einer gewünschten Oberflächenbeschaffenheit bzw. die für die Aufrechterhaltung der Reaktionstemperatur im Oberflächenbereich erforderliche Wärmemenge zugeführt wird und /oder dem Formkörper eine zur Trocknung und /oder Ausreaktion seiner Komponenten ausreichende Wärmemenge zugeführt wird. Mit dem erfindungsgemäßen Verfahren ist es nunmehr in einfacher Weise möglich, die Erwärmung der Formen und gegebenenfalls der Formkörper zu steuern. Energieverluste treten lediglich nur mehr in Form von Leerlaufverlusten des Generators auf und der apparative Aufwand ist gering.

Die Formteile von mehrteiligen Formen, vorzugsweise zweiteilige Formen mit Boden- und Deckelteil, z. B. in Form eines Kastens, werden vorzugsweise bei gleichzeitiger Abdichtung gegeneinander elektrisch isoliert, z. B. mit Epoxiharz, Silikonkautschuk, Silikonharz, Dicht- bzw. Isolierbändern oder dergleichen, um einen Stromfluß in der Form um den Formkörper zu unterbinden. Zur Steuerung der Feldlinien- und Wärmeverteilung bzw. des Stromflusses ist es zweckmäßig, wenn an den Formwänden Rippen, Platten, Verstärkungen, Auftragungen usw. angeschweißt, angenietet, aufgespritzt oder dergleichen sind. Auch Einsätze aus gegenüber dem Formmaterial gleichem und/oder unterschiedlichem Material zur Veränderung der lokalen Wärmeleitfähigkeit, und/oder elektrischen Leitfähigkeit und/oder Permeabilität der Formwände können vorgesehen werden. Es ist hiefür auch möglich, Verdickungen der metallischen Formwände, z. B. einstückige massive Rippen vorzusehen. Diese Anbringungen, Platten, Verdickungen, Rippen können z. B. quer oder längsverlaufend an den Formwänden angeordnet werden; ihre Anordnung wird derart gewählt, daß eine möglichst gleichmäßige Erwärmung über die Form bzw. die Formteile erreicht wird. Aufgebrachte Platten oder massive Rippen können z. B. im Querschnitt einige Millimeter Dicke und einige Zentimeter Breite besitzen. Insbesondere erfüllen derartige Anbringungen bei metallischen Formwänden ihren Zweck. Die Formwände können z. B. aus Stahl sein und sind bevorzugterweise bis 5 mm stark, z. B. 1, 2, 3 mm dick.

Eine Anordnung der eingangs genannten Art ist erfindungsgemäß dadurch gekennzeichnet, daß die Formen zur Herstellung der Formkörper reaktionsfähige Ausgangsstoffe von Kunstharzen oder Kunststoffen, insbesondere Polyurethanschaumstoffen oder mit Latex getränkte oder benetzte Fasern, Vliesen oder dergleichen enthalten, daß der Induktor eine Frequenz von 1 - 30 kHz, vorzugsweise 5 - 12 kHz abgibt und daß die einzelnen Formteile der Formen zur Unterbindung eines Stromflusses in der Form um den Formkörper herum gegeneinander elektrisch isoliert sind.

Vorteilhaft ist es, wenn an den Außenseiten metallischer Formwände zur Verteilung des Stromflusses Verstärkungen oder Auflagen aus einem dem Formmaterial gegebenenfalls gleichen Material ausgebildet oder aufgebracht sind. Der Induktor kann einen quader- bzw. röhrenförmigen Innenraum aufweisen, in den zumindest eine Form einführbar ist, deren einzelne induktiv erhitzbaren Teile, die gegebenenfalls gedichtet sind, gegeneinander elektrisch isoliert sind. Die dünnen Formwände werden zur Wärmezufuhr zur Außenschicht des auszubildenden Formkörpers induktiv beheizt.

Die Schaumdichtigkeit der elektrischen Isolierung muß nicht vollständig sein, da die Formen üblicherweise Austrittsöffnungen für überschüssigen und elektrisch isolierenden Schaum besitzen. Für die Behandlung von Faserstoffen mit Luftgehalt, die kompresibel sind bzw. sich nicht ausdehnen, ist eine Dichtwirkung der elektrischen Isolierung nicht erforderlich. .

Es hat sich erwiesen, daß der Abstand zwischen der Formwand und der Induktorwindung nur geringen Einfluß auf die Erwärmungsgeschwindigkeit und den Wirkungsgrad hat, so daß auch komplexe Formen gut erwärmt werden können.

Gegenüber einer Heißlufterwärmung wird weniger Energie verbraucht, da nur die Formwände erwärmt werden müssen. Im Heißluftofen müssen jedoch alle Einrichtungen, die hinein- und herausbewegt und zum Verschließen notwendig sind, miterwärmt und verfahrensbedingt auch wieder gekühlt werden. Gegenüber dem Heißluftverfahren ist die Aushärte- bzw. Reaktionszeit der Kunststoffkomponenten durch die rasche Erwärmung ca. 50 % kürzer; es sind kürzere Zykluszeiten bzw. weniger Formen für die gleiche Anlagenkapazität notwendig. Bei dampfbeheizten Formen sind die zu erhitzenden, zu kühlenden und zu bewegenden Massen wesentlich größer und damit der Energiebedarf höher.

Es wird erfindungsgemäß ein hoher Wirkungsgrad erreicht, da kein Medium zur Wärmeübertragung notwendig ist und es wird gegenüber Formen, die durch Dampf als Heizmedium erwärmt werden, weniger Energie verbraucht, da das Gewicht der induktionsbeheizten Formen konstruktiv bedingt, höchstens halb so groß ist. Dies ergibt den Vorteil, daß Transport- bzw. Schäumanlagen konstruktiv leichter und damit billiger ausgelegt werden können. Die höchstmögliche Formentemperatur, die erreicht werden kann, ist wesentlich höher und auch leichter erreichbar als bei herkömmlichen Verfahren, da mit der Induktionsheizung ohne weiteres Temperaturen von 150°C oder mehr erreicht werden können, was jedoch mit Dampf und Heißluft schwierig ist.

Schließlich können das erfindungsgemäße Verfahren und die erfindungsgemäße Vorrichtung zur Erwärmung, Trocknung, Ausreaktion aller Materialien eingesetzt werden, bei denen die Wärmezufuhr über die dünne Formwandung zur Durchführung der gewünschten Behandlung ausreicht.

Wenn vorgesehen ist, daß die Form zur Belüftung von aus faserhältigen bzw. aus faserigen Materialien bestehenden Formkörpern Belüftungsöffnungen besitzt, die vorzugsweise im Formboden und Formdeckel ausgebildet sind, können luftdurchlässige Gebilde, z. B. mit Latex besprühte Gummihaargebilde, getrocknet, ausreagiert, ausvulkanisiert usw. werden, indem erwärmte Luft durch den Formkörper geführt wird. Das erfindungsgemäße Verfahren hat gegenüber den herkömmlichen Trocknungs- bzw. Behandlungsarten in diesem Fall den Vorteil, daß Wärme auch an Stellen zugeführt werden kann, an denen es üblicherweise zu keiner Erwärmung kommt, wenn nur eine Trocknung bzw. Erwärmung im Luftstrom vorgesehen ist.

Bevorzugt ist es, wenn zur Erwärmung von im wesentlichen nur der dünnen Formwände die Eindringtiefe des elektrischen oder magnetischen Feldes in die induktiv erwärmbaren Formwände oder deren induktiv erwärmbare Schichten die Dicke der Wände nur geringfügig übersteigt, deren Dicke entspricht oder geringer als deren Dicke ist und etwa 1/10 bis 1/2, insbesondere 1/5 bis 1/3, der Dicke der Formwände oder Schichten beträgt. Bei einem Schichtaufbau der Formwände ist es mitunter zweckmäßig, wenn die Eindringtiefe des Feldes die Dicke der Formwand übersteigt bzw. dieser entspricht. Vorteilhaft kann es auch sein, wenn die Eindringtiefe bis zu 3/4 der Wandstärke beträgt; die gewählte Eindringtiefe wird auch von dem gewünschten Erwärmungsverlauf bestimmt.

Weitere erfindungsgemäße Ausführungsformen sind in den Unteransprüchen angeführt.

Im folgenden wird die Erfindung an Hand eines völlig schematischen Ausführungsbeispieles näher erläutert.

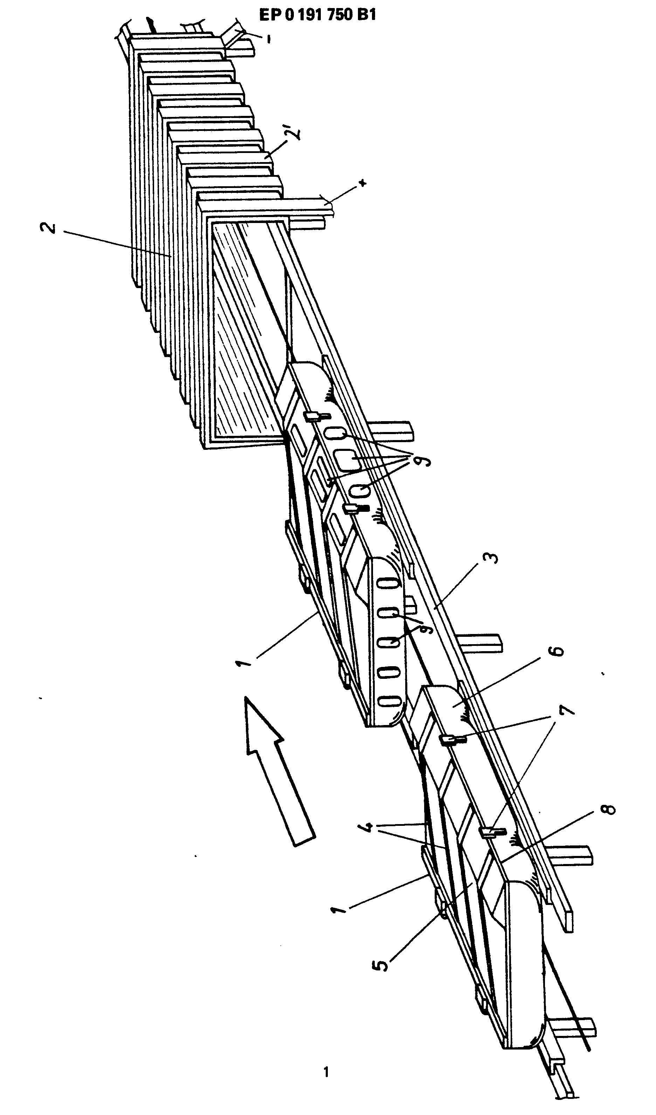

In der Zeichnung ist schematisch ein Induktor 2 dargestellt, der aus einem Stützkasten besteht, um den mit Mittelfrequenz versorgte Induktorwicklungen 2' gewickelt sind, die an einen Generator (nicht dargestellt) angeschlossen sind, der das nötige elektrische Wechselfeld erzeugt. Der Induktor 2 weist bevorzugterweise rechteckigen Querschnitt auf, und seine Länge ist der Formlänge angepaßt, bzw. übersteigt diese, so daß an den vorderen und hinteren Enden einer Form 1 eine ausreichende Induktion und Erwärmung stattfindet. Prinzipiell spielt die Innenform des Induktors keine Rolle. Seine Leistung wird vom Formmaterial bzw. der gewünschten Temperatur der Form bestimmt und die abgegebene Leistung kann mit einer entsprechenden Regeleinrichtung für jede einzelne Form speziell eingeregelt werden.

In den Induktor führen Transporteinrichtungen, z. B. Schienen 3, auf denen 10 die Formen 1 taktweise oder kontinuierlich in bzw. durch den Induktor 2 bewegt werden können. Es ist vorteilhaft, Transportwagen oder Schienen aus nicht aufheizbaren bzw. vom Induktionsfeld nicht beeinflußbaren Materialien vorzusehen.

Die Fig. zeigt schematisch eine Form 1, die im vorliegenden Fall kastenförmig ist, bestehend aus Unterteil 6 und Deckelteil 5, welcher Kasten in seiner Gestalt einer Autositzbank entspricht. Um die Form 1 herum sind Verstärkungsteile 4 bzw. Verstärkungsrahmen angeordnet, die den Oberteil 5 und den Unterteil 6 der Form 1 verstärken und/oder zusammenhalten. Verstärkungsbauteile an verschiedenen Formteilen, insbesondere Verstärkungsteile am Oberteil 5 können mit Verstärkungsteilen am Unterteil 6 mit Verschlüssen bzw. Verbindungseinrichtungen zusammengehalten werden. Verschlüsse 7 dienen zum Verschluß von Oberteil 5 und Unterteil 6. Anstelle der Verstärkungsteile 4 können auch Hilfsrahmen oder dergleichen vorgesehen sein, in die die Form 1 z. B. eingespannt ist. Der Oberteil 5 ist vom Unterteil 6 längs der Linie bzw. des Bereiches 8 trennbar und gleichzeitig elektrisch isoliert. Diese elektrische Isolierung, z. B. durch Epoxiharz oder andere Kunststoffe bzw. beliebige elektrisch isolierende Materialien ausreichender Festigkeit und Temperaturbeständigkeit, isoliert elektrisch den Oberteil 5 vom Unterteil 6 völlig und dichtet gleichzeitig die Form 1 ab. In ähnlicher Weise sind die Verschlüsse 7 und die Verstärkungselemente 4 ausgeführt, so daß sie einen Stromfluß vom Deckeloberteil 5 zum Deckelunterteil 6 bzw. die Ausbildung elektrisch leitender Ringe um die Form 1 verhindern. Hiezu sind geeignete Trennisolierungen zwischen den Verschlüssen 7 bzw. den einzelnen Verbindungseinrichtungen bzw. den Verstärkungsteilen 4 vorgesehen oder die Verschlüsse 7, die Verstärkungsteile 4 und die Verbindungseinrichtungen, wie z. B. die Scharniere, bestehen aus elektrisch isolierendem Material.

Die tatsächlich in der Praxis eingesetzten Formen weisen ausgesprochen unregelmäßige Außengestalt auf, da sie der gewünschten Form des Formkörpers angepaßt sind, z. B. weisen die Formen die unterschiedlichsten Gestalten von Sitzpolsterungen für Autos, von Armstützen usw. auf.

Als den Deckelteil und den Bodenteil gegeneinander elektrisch isolierende Massen können aushärtende Dichtmassen oder auch fertige einlegbare Dicht- bzw. Isolierelemente, vorgesehen werden. Es werden damit den in der Form induzierten Strömen keine bevorzugten Laufbahnen um die Form herum geboten und eine undefinierte Erwärmung aufgrund umlaufender Kurzschlußströme vermieden. Gleiches gilt auch für die Hilfsrahmen bzw. für miteinander verbundene Verstärkungsteile 4, die auf getrennten Formteilen angeordnet sind.

Prinzipiell genügt es, um einen umlaufenden Ring zu vermeiden, daß eine elektrische Trennisolation eingefügt bzw. ein Schlitz derart vorgesehen wird, daß keine ringförmigen Ströme fließen. Hiezu ist möglich, daß z. B. die kurzen bzw. kleinen Seitenflächen und die Vorderseite der in der Figur dargestellten Form jeweils aus zwei Teilen ausgebildet und elektrisch voneinander isoliert sind, während die Hinterwand aus einem Stück oder zwei leitend miteinander verbundenen (z. B. mit einem Scharnier) oder nicht gegeneinander isolierten Formteilen besteht. Die elektrisch leitenden Flächen besitzen damit in einem Querschnitt durch die Form etwa die Gestalt eines C, eine Gestalt, die ausreicht, unerwünschte Ringströme zu unterbinden. Auch nur die Scharniere bzw. Verschlüsse an der Formhinterwand könnten elektrisch leitend ausgebildet sein, wenn diejenigen auf den anderen Formwänden isolierend ausgeführt sind.

In der Praxis wird die Form jedoch bevorzugterweise über den gesamten Umfang der beiden bzw. aller zusammengepaßten Formteile gegeneinander elektrisch isoliert. Besteht die Form aus mehr als zwei Teilen, werden diese an den benachbarten Kanten in entsprechender Weise gegeneinander elektrisch isoliert, um unerwünschte Ringströme zu vermeiden.

Wesentlich ist ferner, daß durch Dickenveränderungen der Formwände die Erwärmung der Formwände bzw. die von der Formwand erreichte Temperatur lokal gesteuert bzw. verändert werden kann. Dickere Wände erwärmen sich langsamer, wenn die Wärme gut abgeleitet werden kann, bzw. die Eindringtiefe des elektrischen Feldes ist im Verhältnis zur Wanddicke geringer.

Es ist dazu möglich, elektrisch gut leitende und/oder gut wärmeleitende Materialien, z. B. Metalle wie Cu, Fe bzw. Legierungen an den metallischen Formwänden anzubringen, die auch als elektrische Brücken zwischen Zonen hoher und niedriger Wirbelstromdichte fungieren und eine zusätzliche Erwärmung bzw. einen Ausgleich zwischen hohen und niedrigen Temperaturen bewirken. Diese Materialien bzw. Anbringungen können aus elektrisch besser bzw. auch schlechter leitenden Materialien und/oder aus besser oder schlechter wärmeleitenden Materialien im Vergleich zu dem Material der vorzugsweise metallischen insbesondere stählernen Formwände bestehen. Diese örtlichen Aufbringungen von Fremdmaterialien z. B. in Form von Metallen, Legierungen oder dergleichen, bewirken, daß sich die Formwände an diesen Stellen langsamer oder schneller erwärmen als das Basismaterial der Formwände und die Temperatur der unregelmäßigen Form über ihre Oberfläche gleichmäßig wird.

In der Fig. sind an der Form 1 angebrachte Platten 9 dargestellt, die verschiedene Formen und Abmessungen besitzen können und an verschiedenen Stellen der Formwände angebracht sein können, d.h. an den Seitenwänden und/oder am Deckelteil 5 und/oder am Bodenteil 6 angebracht, z. B. angeschweißt, sein können. Das Material der Platten kann vorteilhafterweise dem der Formwände entsprechen; anstelle oder zusätzlich können in den Formwänden auch mit den Wänden (d.h. den Seitenwänden und/oder dem Boden und/oder dem Deckel) einstückige Verdickungen integriert werden, deren Wirkung der der Platten 9 entspricht.

Durch entsprechende Wahl des Materials der Formwände und insbesondere des der Platten 9 und Auswahl der Anbringungsstelle an den Wänden oder auch durch Schwächung der Formwände oder Ersatz des Materials der Formwände durch anderes Material bzw. Konstruktion der Form aus verschiedenen Materialien wird Einfluß auf die Permeabilität und/oder die elektrische Leitfähigkeit und/oder Wärmeleitfähigkeit der Formwände gewonnen, so daß ein gleichmäßiger Temperaturverlauf in den Formwänden erreicht wird.

Die Formwände können auch aus mehreren Schichten bestehen, z. B. aus einer Schicht aus Kunststoff, die an ihrer Innenseite mit einer Metallschicht ausgekleidet ist, die induktiv erwärmt wird. Dabei ist Sorge zu tragen, daß die Eindringtiefe des Feldes so bemessen wird, daß es bis in die induktiv erwärmbare Schicht eindringt.

Es kann darauf geachtet werden, daß nur die Formwände und nicht der Kunststoff bzw. die auszureagierenden Komponenten induktiv erwärmt werden, indem die Eindringtiefe des induzierten elektrischen Feldes kleiner als die Wandstärke gehalten wird. Bevorzugt ist es, daß die Eindringtiefe derart geregelt wird, daß nur die insbesondere metallische Formwand bzw. die induktiv erwärmbare(n) Schicht (en) in der Formwand erwärmt werden und von der Formwand der Außenschicht des Formkörpers die zur Ausbildung einer gewünschten Oberflächenbeschaffenheit bzw. Formungstemperatur erforderliche Wärmemenge zugeführt wird.

Der innere Querschnitt des Induktors ist vorzugsweise rechteckig, kann jedoch auch oval oder zylindrisch, bzw. speziellen Gestalten der Formen angepaßt sein.

Das erfindungsgemäße Verfahren bzw. die erfindungsgemäße Vorrichtung ist auch anwendbar, wenn die Formen zur Ausbildung des Formkörpers im Induktor rotiert werden, z. B. um im Schleudergußverfahren aus entsprechenden Kunststoffen Gegenstände in den induktiv beheizten Formen auszubilden.

Das Verfahren bzw. die Vorrichtung ist auch verwendbar für Fasermatten z. B. Glasfasermatten, die mit Kunststoffen, z. B. Polyurethanschäumen, vergossen bzw. besprüht werden und getrocknet, gepreßt, ausreagiert bzw. ausgehärtet werden sollen.

Alle der Beschreibung, den Patentansprüchen und der Zeichnung entnehmbaren Merkmale sind beliebig kombinierbar.

## Patentansprüche

1. Verfahren zur Herstellung von Formkörpern in Formen (1), wobei die mehrteiligen, vorzugsweise metallischen, Formen (1) in einen die Formen umgebenden Induktor (2) zur induktiven Erwärmung der Formen (1) eingeführt werden, in denen die Ausgangsstoffe für die Formkörper enthalten sind, dadurch gekennzeichnet, daß zur Herstellung von Formkörpern aus Kunststoff, insbesondere aus Polyurethanschaumstoff oder aus mit Kunstharzen oder Latex getränkten oder benetzten Fasern, Vliesen oder dergleichen, aus den in die Formen (1) eingebrachten reaktionsfähigen Ausgangsstoffen eine Frequenz von 1 - 30 kHz, vorzugsweise 5 - 12 kHz, eingestellt wird und Formen (1) eingesetzt werden, bei denen die einzelnen Formteile (5, 6) zur Unterbindung eines Stromflusses in der Form (1) um den Formkörper herum gegeneinander elektrisch isoliert sind.

2. Verfahren nach Anspruch 1, dadurch gekennzeichnet, daß der Stromfluß in den Formwänden metallischer Formen (1) mit an den Außenseiten der Formwände ausgebildeten oder aufgebrachten Verstärkungen bzw. Auflagen (4, 9) aus einem dem Formmaterial gegebenenfalls gleichen Material verteilt wird.

3. Anordnung zur Herstellung von Formkörpern mit einem Induktor (2) und mehrteilige, vorzugsweise metallische, Formen (1), die in den Induktor (2) zur induktiven Erwärmung einführbar sind und die Ausgangsstoffe für die Formkörper enthalten, insbesondere zur Durchführung des Verfahrens nach Anspruch 1 oder 2, dadurch gekennzeichnet, daß die Formen (1) zur Herstellung der Formkörper reaktionsfähige Ausgangsstoffe von Kunstharzen oder Kunststoffen, insbesondere Polyurethanschaumstoffen oder mit Latex getränkte oder benetzte Fasern, Vliesen oder dergleichen enthalten, daß der Induktor (2) eine Frequenz von 1 - 30 kHz, vorzugsweise 5 - 12 kHz abgibt und daß die einzelnen Formteile (5, 6) der Formen (1) zur Unterbindung eines Stromflusses in der Form (1) um den Formkörper herum gegeneinander elektrisch isoliert sind.

4. Anordnung nach Anspruch 3, dadurch gekennzeichnet, daß an den Außenseiten metallischer Formwände zur Verteilung des Stromflusses Verstärkungen oder Auflagen (4, 9) aus einem dem Formmaterial gegebenenfalls gleichen Material ausgebildet oder aufgebracht sind.

5. Anordnung nach Anspruch 3, dadurch gekennzeichnet, daß die Formen (1) Wände aus Schichten verschiedener Metalle, vorzugsweise aus Eisenblech, Stahlblech, Cu oder Wände aus Kunststoff oder aus bei der eingesetzten Frequenz induktiv nicht erwärmbarem Material mit zumindest einer Schicht aus induktiv erhitzbarem Material (Metall, Kohlenstoff) oder mehrschichtige Wände mit Schichten aus induktiv erhitzbarem und induktiv nicht erwärmbarem Material aufweisen.

6. Anordnung nach einem der Ansprüche 3 - 5, dadurch gekennzeichnet, daß zur Erwärmung von im wesentlichen nur der dünnen Formwände die Eindringtiefe des elektrischen oder magnetischen Feldes in die induktiv erwärmbaren Formwände oder deren induktiv erwärmbare Schichten die Dicke der Wände nur geringfügig übersteigt, deren Dicke entspricht oder geringer als deren Dicke ist und etwa 1/10 bis 1/2, insbesondere 1/5 bis 1/3, der Dicke der Formvände oder Schichten beträgt.

7. Anordnung nach einem der Ansprüche 3 - 6, dadurch gekennzeichnet, daß bei zweiteiligen, einen mit Scharnieren und Verschlüssen (7) zusammengehaltenen Boden- und Deckelteil (5, 6) aufweisenden, kastenförmigen Formen (1), die gegeneinander elektrisch isolierten Boden- und Deckelteile (5, 6) von den Scharnieren oder Verschlüssen (7) auf einer Seitenwand elektrisch leitend verbunden sind, wobei allfällige Scharniere oder Verschlüsse anderer Seitenwände den Boden- und Deckelteil elektrisch gegeneinander isolierend ausgebildet sind.

8. Anordnung nach einem der Ansprüche 3 bis 7, dadurch gekennzeichnet, daß bei mehr als zweiteiligen Formen (1) auf verschiedenen Formteilen gelegene zusammenwirkende Verschlußteile zum Zusammenhalt der Form (1) gegenseitig elektrisch isoliert sind.

9. Anordnung nach einem der Ansprüche 3 bis 8, dadurch gekennzeichnet, daß bei einer zweiteiligen Form (1) der Boden- und Deckelteil (5, 6) längs einer Seitenwand z. B. über ein Scharnier elektrisch leitend verbunden ist.

10. Anordnung nach einem der Ansprüche 3 bis 9, dadurch gekennzeichnet, daß zur gegenseitigen elektrischen Isolierung der Formteile (5, 6) zwischen diesen elektrisch isolierende, die Form gleichzeitig abdichtende Dichtungsbauteile oder Dichtmassen (8) vorgesehen sind.

11. Anordnung nach einem der Ansprüche 3 bis 10, dadurch gekennzeichnet, daß die Formen (1) zur Abstützung von einem Hilfsrahmen umgeben sind, der aus einem bei der eingesetzten Frequenz induktiv nicht erwärmbaren Material besteht, wobei dessen den einzelnen Formteilen zugeordneten oder an diesen angebrachten Teile gegeneinander elektrisch isoliert sind.

## Claims

1. A process for the production of formed bodies in moulds (1), the composite, preferably metallic moulds (1) being introduced into an inductor (2) enclosing them for inductive heating of the moulds (1) in which the starting materials for the formed bodies are contained, characterized in that for the production of formed bodies of plastics materials, in particular of foamed polyurethane or fibers, non-woven fabrics or the like impregnated or wetted with synthetic resins or latex of the reactive materials introduced into the moulds (1), a frequency of 1 to 30 kHz, preferably 5 to 12 kHz is adjusted and the moulds (1) used are of the type in which the individual parts (5, 6) of the mould are electrically insulated against one another so as to prevent a current flow in the mould (1) around the formed body.

2. The process according to claim 1, characterized in that the current flow in the mould walls of metallic moulds (1) is distributed by reinforcements or layers (4, 9) optionally consisting of the same material as the mould and formed on or applied to the outsides of the mould walls.

3. A structure for the production of formed bodies having an inductor (2) and composite, preferably metallic moulds (1) introduceable into the inductor (2) for inductive heating and containing the starting materials for the formed bodies, in particular for carrying out the process according to claim 1 or 2, characterized in that the moulds (1) for the production of the formed bodies contain reactive starting materials of synthetic resins or plastics materials, in particular foamed polyurethane or fibres, non-woven fabrics or the like impregnated or wetted with latex, that the inductor (2) generates a frequency of 1 to 30 kHz, preferably 5 to 12 kHz and that the individual parts (5, 6) of the moulds are electrically insulated against one another so as to prevent a current flow in the mould (1) around the formed body.

4. The structure according to claim 3, characterized in that the outsides of metallic mould walls are provided with reinforcements or layers (4, 9) optionally consisting of the same material as the mold and formed or applied thereon for the distribution of the current flow.

5. The structure according to claim 3, characterized in that the moulds (1) are provided with walls of layers of different metals, preferably sheet iron, sheet steel, Cu or walls of plastics materials or of a material not inductively heatable at the frequency used with at least one layer of inductively heatable material (metal, carbon) or multi-layer walls with layers of inductively heatable and inductively unheatable material.

6. The structure according to any one of the claims 3 to 5, characterized in that for heating essentially only the thin mould walls, the penetration depth of the electric or magnetic field into the inductively heatable mould walls or their inductively heatable layers only slightly exceeds the thickness of the walls, corresponds to their thickness or is less than their thickness and amounts to about 1/10 to 1/2, in particular 1/5 to 1/3, of the thickness of the mould walls or layers.

7. The structure according to any one of the claims 3 to 6, characterized in that in two-piece moulds (1) having a bottom part (5) and a lid part (6) held together by means of hinges and locks, the mutually electrically insulated bottom and lid parts (5, 6) of the box-shaped moulds (1) are electrically conductively connected on one side wall by the hinges or locks, optional hinges or locks of other side walls being formed so as to electrically insulate the bottom and lid parts against one another.

8. The structure according to any one of the claims 3 to 7, characterized in that in the case of moulds (1) consisting of more than two parts, locking elements located on different parts of the mould and cooperating in holding the mould (1) together are electrically insulated against one another.

9. The structure according to any one of the claims 3 to 8, characterized in that in a mould (19) consisting of two parts, the bottom and lid parts (5, 6) are electrically conductively connected along a side wall, for instance by means of a hinge.

10. The structure according to any one of the claims 3 to 9, characterized in that for the mutual electric insulation of the mould parts (5, 6), sealing elements or sealing compounds (8) electrically insulating and sealing the mould at the same time are provided between said parts (5, 6).

11. The structure according to any one of the claims 3 to 10, characterized in that the moulds (1) are surrounded for support by an auxiliary frame consisting of a material not inductively heatable at the frequency used, the parts of said frame associated with the individual mould parts or attached to them being mutually electrically insulated.

**Revendications**

1. Procédé de fabrication de corps moulés en moules (1), les moules (1) composés, de préférence en métal, étant introduits dans un inducteur (2) pour le chauffage inductif des moules (1) dans lesquels les matières premières pour les corps moulés sont contenues, caractérisé en ce que pour la fabrication de corps moulés en matières plastiques, en particulier en mousse de polyuréthane ou fibres, non-tissés, etc. imprégnés ou mouillés de résines synthétiques ou latex des matières premières réactives introduites dans les moules (1), une fréquence de 1 à 30 kHz, de préférence 5 à 12 kHz, est ajustée et les moules (1) sont du type dans lequel les parties individuelles (5, 6) du moule sont électriquement isolées mutuellement pour éviter une conduction de courant dans le moule (1) autour du corps moulé.

2. Procédé selon la revendication 1, caractérisé en ce que la conduction de courant dans les parois des moules (1) en métal est distribuée au moyen de renforcements ou couches (4, 9) formés ou appliqués aux surfaces extérieures des parois des moules (1) et formés, le cas échéant, d'un matériau identique au matériau du moule.

3. Dispositif pour la fabrication de corps moulés pourvu d'un inducteur (2) et de moules (1) composés, de préférence en métal introduisables dans l'inducteur (2) pour le chauffage inductif et contenant les matières premières pour les corps moulés, en particulier pour la mise en oeuvre du procédé selon la revendication 1 ou 2, caractérisé en ce que les moules (1) pour la fabrication des corps moulés contiennent des matières premières de résines synthétiques ou matières plastiques, en particulier mousses de polyuréthane ou fibres, non- tissés, etc. imprégnés ou mouillés de latex, que l'inducteur (2) produit une fréquence de 1 à 30 kHz, de préférence de 5 à 12 kHz et que les parties individuelles (5, 6) des moules (1) sont électriquement isolées mutuellement pour éviter une conduction de courant dans le moule (1) autour du corps moulé.

4. Dispositif selon la revendication 3, caractérisé en ce que les surfaces extérieures de parois de moules en métal sont pourvues de renforcements ou couches (4, 9) consistant, le cas échéant, du même matériau que les moules et formés ou appliqués auxdites surfaces pour la distribution de la conduction de courant.

5. Dispositif selon la revendication 3, caractérisé en ce que les moules (1) sont pourvus de parois en couches de divers métaux, de préférence en tôle de fer, tôle d'acier, Cu ou de parois en matières plastiques ou en une matière non chauffable à la fréquence utilisée avec au moins une couche en une matière inductivement chauffable (métal, carbone) ou de parois en plusieurs couches en matières inductivement chauffables et inductivement non chauffables.

6. Dispositif selon une des revendicatins 3 à 5, caractérisé en ce que pour chauffer essentiellement seulement les parois minces du moule, la profondeur de pénétration du champ électrique ou magnétique dans les parois de moule inductivement chauffables ou de leurs couches inductivement chauffables ne surpasse que faiblement l'épaisseur des parois, correspond à leur épaisseur ou est de plus faible épaisseur et est de 1/10 à 1/2, en particular 1/5 à 1/3, de l'épaisseur des parois de moule ou des couches.

7. Dispositif selon une des revendications 3 à 6, caractérisé en ce que dans les moules (1) en deux parties en châssis pourvus d'une partie de fond (5) et une partie de couverture (6) retenues d'articulations et de fermetures (7), les parties de fond et de couverture (5, 6) mutuellement électriquement isolées sont électriquement conductivement reliées sur une paroi latérale par les articulations ou fermetures (7), les articulations ou fermetures d'autres parois latérales étant formées pour l'isolation électrique mutuelle de la partie de fond et la partie de couverture.

8. Dispositif selon une des revendications 3 à 7, caractérisé en ce que dans les moules (1) en plus que deux parties, les parties de fermeture disposées sur les différentes parties du moule (1) coopérant pour tenir ensemble le moule sont mutuellement électriquement isolées.

9. Dispositif selon une des revendications 3 à 8, caractérisé en ce que dans un moule (1) en deux parties, la partie de fond et la partie de couverture (5, 6) sont électriquement conductivement reliées lelong d'une paroi latérale, par exemple par l'intermédiaire d'une articulation.

10. Dispositif selon une des revendications 3 à 9, caractérisé en ce que pour l'isolation électrique mutuelle des parties (5, 6) du moule, des éléments d'étanchéité ou matériaux d'étanchéité (8) rendant étanche le moule au même temps sont pourvus entre lesdites parties.

11. Dispositif selon une des revendications 3 à 10, caractérisé en ce que les moules (1) sont entourés pour leur appui d'un cadre auxiliare consistant d'une matière non chauffable inductivement à la fréquence utilisée, les parties associées aux parties individuelles du moule ou attachées auxdites parties étant mutuellement électriquement isolées.

1